# EUROPEAN PATENT SPECIFICATION

(11) **EP 3 059 899 B1**
(45) Date of publication and mention of the grant of the patent: **23.09.2020**
(21) Application number: 15858097.7
(22) Date of filing: 05.11.2015
(51) Int. Cl.: H04L 9/32, G06F 21/30, H04L 29/06, H04W 12/06, H04W 84/20

(54) **PERMISSION VERIFICATION METHOD AND DEVICE**
VERFAHREN UND VORRICHTUNG ZUR ERLAUBNISVERIFIZIERUNG
PROCÉDÉ ET DISPOSITIF DE VALIDATION D'AUTORISATION

(30) Priority: 14.11.2014 CN 201410646289
(43) Date of publication of application: 24.08.2016
(73) Proprietor: Xiaomi Inc., Beijing 100085 (CN)
(72) Inventor: ZHANG, Yanlu, Beijing 100085 (CN); YIN, Mingjun, Beijing 100085 (CN); GAO, Ziguang, Beijing 100085 (CN)
(74) Representative: Loustalan, Paul William
(86) International application number: PCT/CN2015/093906
(87) International publication number: WO 2016/074586

(56) References cited:
- CN-A- 102 790 674
- CN-A- 103 516 726
- CN-A- 103 795 571
- CN-A- 103 795 571
- CN-A- 104 468 524
- US-A1- 2010 071 048

## Description

### TECHNICAL FIELD

The present disclosure relates to the field of communication technology, and more particularly, to a method and a device for verifying permission.

### BACKGROUND

In applications of wireless Internet of things, authentication bound to the control right of a device is a difficult problem. At present, the two-dimension code is used commonly. However, one two-dimension code identified uniquely is required to attach on the surface of the bound device. The user may use the camera of the mobile phone to shoot the two-dimension code, so as to obtain the unique identification code, and then verify the unique identification code in the remoter server. If the remote server verifies that it is valid, that is, it proves that the user has the ownership of the device attached with the two-dimension code. However, the user is required to use the mobile phone to scan the two-dimension code, which is not friendly to the devices inconvenient for operations.

CN103516726A discloses a verification method, device, client side, server and equipment based on terminal behavior. The method comprises the steps that verification information is generated, the verification information comprises appointed shaking direction and frequency; terminal behavior is detected, detecting information of terminal behavior is obtained, the detecting information of terminal behavior comprises terminal shaking direction and frequency; if the terminal shaking direction and frequency are the same as the appointed shaking direction and frequency, verification is successful. The fact that the verification information is submitted by a user can be guaranteed, and a rogue program is prevented from simulating user behavior to submit the verification information.

CN103795571A discloses a binding method and device between equipment. The method includes the following steps that the first equipment sends a binding data generating request with a first equipment identification to a server and receives binding data responded by the server; the second equipment obtains the first equipment identification by utilizing the binding data obtained by the first equipment through user operation; the second equipment sends a binding request with the first equipment identification and the second equipment identification to the server; the server responds to the binding request and constructs the binding relation between the first equipment and the second equipment. According to the binding method and device between the equipment, the first equipment or the second equipment does not need to register on the server in advance through mails or short messages, and operation processes are simplified.

### SUMMARY

The invention is defined by the independent claims to which reference is now made. Advantageous features of the invention are set out in the dependent claims.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for verifying permission according to an illustrative embodiment;
Fig. 2 is a flow chart showing a method for verifying permission according to an illustrative embodiment;
Fig. 3 is a flow chart showing a method for verifying permission according to an illustrative embodiment;
Fig. 4 is a flow chart showing a method for verifying permission according to an illustrative embodiment;
Fig. 5 is a flow chart showing a method for verifying permission according to an illustrative embodiment;
Fig. 6 is a flow chart showing a method for verifying permission according to an illustrative embodiment;
Fig. 7 is a flow chart showing a method for verifying permission according to an illustrative embodiment;
Fig. 8 is a flow chart showing a method for verifying permission according to an illustrative embodiment;
Fig. 9 is a flow chart showing a method for verifying permission according to an illustrative embodiment;
Fig. 10 is a block diagram showing a device for verifying permission according to an illustrative embodiment;
Fig. 11 is a block diagram showing a device for verifying permission according to an illustrative embodiment;
Fig. 12 is a block diagram showing a device for verifying permission according to an illustrative embodiment;
Fig. 13 is a block diagram showing a device for verifying permission according to another illustrative embodiment;
Fig. 14 is a block diagram showing a device for verifying permission according to another illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of devices and methods consistent with aspects related to the disclosure as recited in the appended claims.

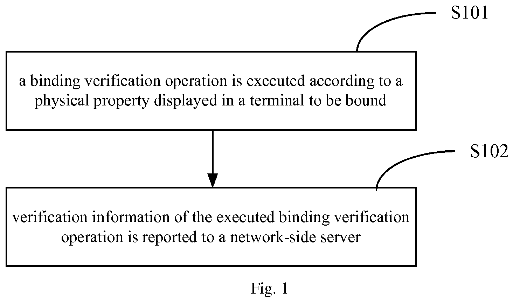

Fig. 1 is a flow chart showing a method for verifying permission according to an illustrative embodiment. As shown in Fig. 1, the method is suitable for a control terminal, for example, a mobile phone, a tablet, a PC, etc., and the method includes following steps.

In step S101, a binding verification operation is executed according to a physical property displayed in a terminal to be bound. For example, the physical property may be one or more of a displayed random number, a displayed random character, a displayed pattern, a displayed pattern, a color of an indicator light, the number of indicator lights, a flashing frequency of an indicator light, a voice output, a physical deformation and a physical displacement. When the physical property displayed in the terminal to be bound is the displayed random character, the control terminal may execute the binding verification operation for inputting this random character. When the physical property displayed in the terminal to be bound is the color of the indicator light, the control terminal may execute the binding verification operation for inputting this color of the indicator light. Other forms will not be elaborated herein.

In step S102, verification information of the executed binding verification operation is reported to a network-side server. For example, the input color information of the indicator light is taken as the verification information and sent to the network-side server.

In an embodiment, the method further includes: sending a binding request to the network-side server via a current account after establishing a communication connection with the terminal to be bound; receiving a binding operation prompt for the physical property of the terminal to be bound returned by the network-side server.

In an embodiment, the method further includes: receiving a binding result returned by the network-side server according to the verification information; determining a control relationship between the current account and the terminal to be bound if the binding result is successful; displaying a binding failure prompt if the binding result is failing.

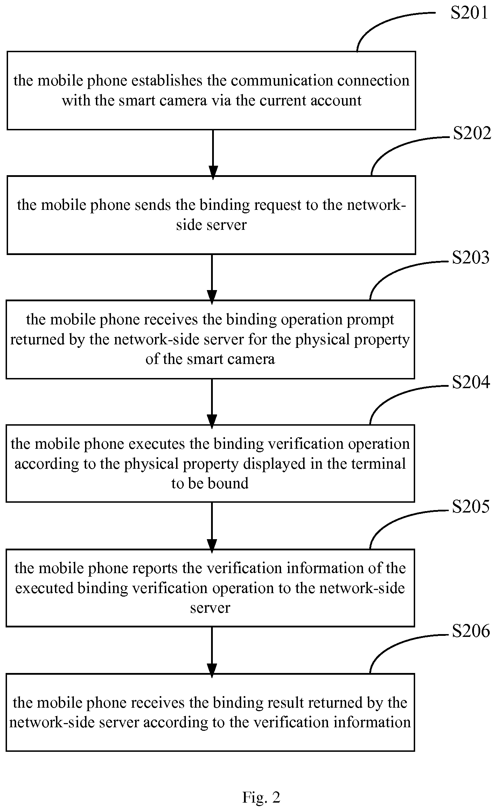

Taking the mobile phone obtaining an operation permission of a smart camera as an example, the method provided by the embodiment will be described in detail, and as shown in Fig. 2, the method is suitable for the mobile phone, and includes following steps.

In step S201, the mobile phone establishes the communication connection with the smart camera via the current account. For example, the mobile phone finds the smart camera via the network-side server or a local area network. The mobile phone may also find the smart camera by broadcasting via itself or by other manners directly.

In step S202, the mobile phone sends the binding request to the network-side server.

In step S203, the mobile phone receives the binding operation prompt for the physical property of the smart camera returned by the network-side server. For example, the binding operation prompt may be "please input the number of flashing of the indicator light".

In step S204, the mobile phone executes the binding verification operation according to the physical property displayed in the terminal to be bound. For example, the input number of flashing is received.

In step S205, the mobile phone reports the verification information of the executed binding verification operation to the network-side server. For example, the mobile phone reports the received input number of flashing to the network-side server.

In step S206, the mobile phone receives the binding result returned by the network-side server according to the verification information. The control relationship between the current account and the terminal to be bound is determined if the binding result is successful; and the binding failure prompt is displayed if the binding result is failing.

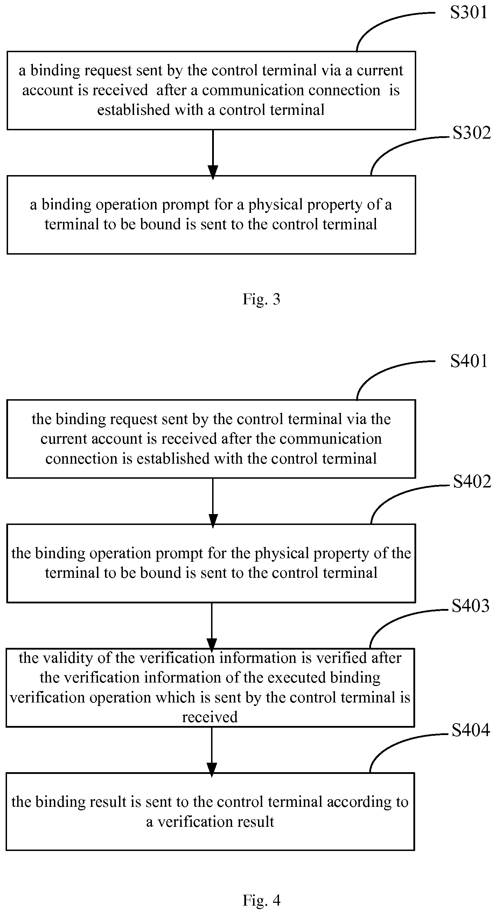

Based on the same idea, Fig. 3 is a flow chart showing a method for verifying permission according to an illustrative embodiment. As shown in Fig. 3, the method is suitable for a network-side server, for example, a cloud server, a router, etc., and the method includes following steps.

In step S301, a binding request sent by a control terminal via a current account is received after a communication connection is established with the control terminal.

In step S302, a binding operation prompt for a physical property of a terminal to be bound is sent to the control terminal.

For example, after the binding request sent by the control terminal via the current account is received, the terminal to be bound that is required for bonding by the control terminal is determined. The binding operation prompt is sent to the control terminal according to the physical property of the terminal to be bound. For example, the terminal to be bound has the indicator light, and a content of the binding operation prompt may aim at the indicator light. The terminal to be bound has a display screen, and the content of the binding operation prompt may aim at a content displayed in the display screen. The terminal to be bound has a physical button, and the content of the binding operation prompt may aim at the physical button.

In an embodiment, the method further includes: sending an operation instruction for displaying the physical property to the terminal to be bound meanwhile sending the binding operation prompt for the physical property of the terminal to be bound to the control terminal. For example, the operation instruction for displaying numbers, the operation instruction for lighting the indicator light, the operation instruction for controlling the terminal to be bound to have the physical deformation, the operation instruction for controlling the terminal to be bound to have the physical displacement and other operation instructions may be sent to the terminal to be bound.

In an embodiment, the operation instruction for displaying the physical property includes one or more of displaying a random number, displaying a random character, displaying a pattern, displaying a phrase, controlling a color of an indicator light, controlling the number of indicator lights, controlling a flashing frequency of an indicator light, controlling a voice output, a physical deformation and a physical displacement. For example, moving left, rotating right, depressing down the screen, these will not be elaborated herein.

In an embodiment, the method further includes: verifying a validity of verification information after receiving the verification information of an executed binding verification operation that is sent by the control terminal and/or the terminal to be bound; sending a binding result to the control terminal according to a verification result. For example, the operation instruction for displaying the physical property sent to the terminal to be bound is displaying a number 567, and the verification information reported by the control terminal is a number 345, so this verification information is not valid, and thus the control terminal cannot obtain the control permission of the terminal to be bound. As another example, the received verification information sent from the terminal to be bound is pressing a switch three times, and the binding operation prompt sent to the control terminal is pressing the switch three times, so this verification information is valid and thus the control terminal obtains the control permission of the terminal to be bound. When verifying the validity, it may be detected whether this verification information is received within a preset period, and if this verification information is received beyond the preset period, this verification information is invalid.

In an embodiment, the method further includes: establishing a control relationship between the current account and the terminal to be bound if the verification result is valid. The control relationship may be stored after being established, such that the current account obtains the permission of controlling the terminal to be bound in a long term until unbinding.

Taking a Pad obtaining an operation permission of a smart outlet as an example, the method provided by the embodiment will be described in detail. As shown in Fig. 4, the method is suitable for the network-side server and includes following steps.

In step S401, the binding request sent by the control terminal via the current account is received after the communication connection is established with the control terminal. For example, the binding request for binding the smart outlet sent by the Pad is received after the communication connection is established with the Pad.

In step S402, the binding operation prompt for the physical property of the terminal to be bound is sent to the control terminal. For example, a prompt of "please input the color of the indicator light" is sent to the control terminal. At the same time, the operation instruction for displaying the physical property is sent to the terminal to be bound, i.e., the smart outlet, for example, the operation instruction for displaying blue in the indicator light.

In step S403, the validity of the verification information is verified after the verification information of the executed binding verification operation which is sent by the control terminal is received. When the binding operation prompt is "please input the color of the indicator light", if the verification information sent by the control terminal is blue, the verification information is valid. When verifying the validity, it is detected whether this verification information is received within a preset period, and if the verification information is received beyond the preset period, this verification information is invalid.

In step S404, the binding result is sent to the control terminal according to a verification result. When the verification result is valid, the control relationship between the current account and the terminal to be bound is established.

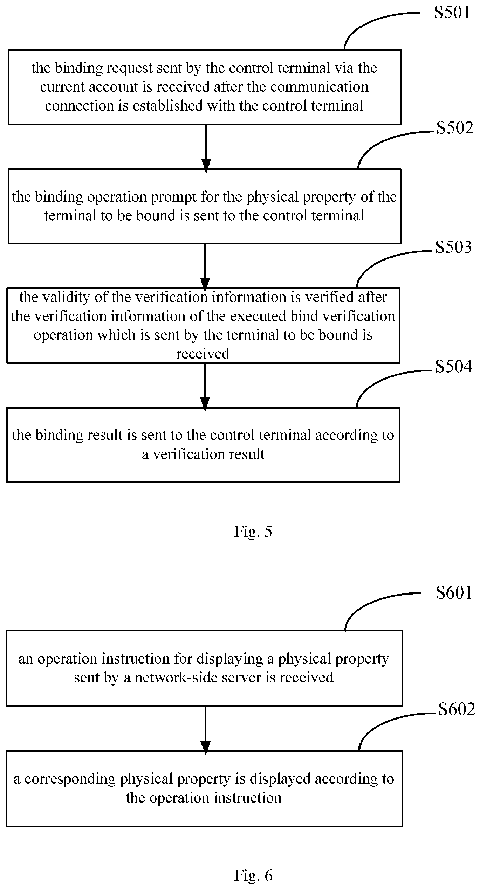

Taking the Pad obtaining the operation permission of the smart outlet as an example, the method provided by the embodiment will be described in detail. As shown in Fig. 5, the method is suitable for the network-side server and includes following steps.

In step S501, the binding request sent by the control terminal via the current account is received after the communication connection is established with the control terminal. For example, the binding request for binding the smart outlet sent by the Pad is received after the communication connection is established with the Pad.

In step S502, the binding operation prompt for the physical property of the terminal to be bound is sent to the control terminal. For example, the prompt of "please press the on-off button two times" is sent to the control terminal.

In step S503, the validity of the verification information is verified after the verification information of the executed binding verification operation which is sent by the terminal to be bound is received. For example, the verification information reported by the smart outlet is that the on-off button is pressed two times, and thus the verification information is valid. When verifying the validity, it is detected whether this verification information is received within a preset period, and if this verification information is received beyond the preset period, this verification information is invalid.

In step S504, the binding result is sent to the control terminal according to a verification result. When the verification result is valid, the control relationship between the current account and the terminal to be bound is established.

Based on the same idea, Fig. 6 is a flow chart showing a method for verifying permission according to an illustrative embodiment. As shown in Fig. 6, the method is suitable for a smart terminal, for example, a smart outlet, a smart camera, a smart purifier, a smart air conditioner, etc., and the method includes following steps.

In step S601, an operation instruction for displaying a physical property sent by a network-side server is received.

In step S602, a corresponding physical property is displayed according to the operation instruction.

The operation instruction for displaying the physical property includes one or more of displaying a random number, displaying a random character, displaying a pattern, displaying a phrase, controlling a color of an indicator light, controlling the number of indicator lights, controlling a flashing frequency of an indicator light, controlling a voice output, a physical deformation and a physical displacement.

In an embodiment, the method further includes: sending verification information to the network-side server after receiving a binding verification operation for the physical property, for example, receiving that a device button is operated, receiving that a remote controller is operated, collecting a continuously shaking image, collecting a particular voice input, sensing that an electromagnetic induction switch is operated, etc.

The method provided by embodiments of the present disclosure, may perform the permission verification by the physical property of the terminal to be bound, simplify the verification operation of the permission, make the user complete the permission verification by the simple button clicking operation, and have the high safety. The method also may avoid that adjacent control terminals forestall to obtain the control permission of the device to be bound when finding the device to be bound. For example, when the mobile phone in the neighborhood finds the user's smart device, if only the verification code pushed by the server needs to be input simply, it is easy for other users to the control permission of the smart device.

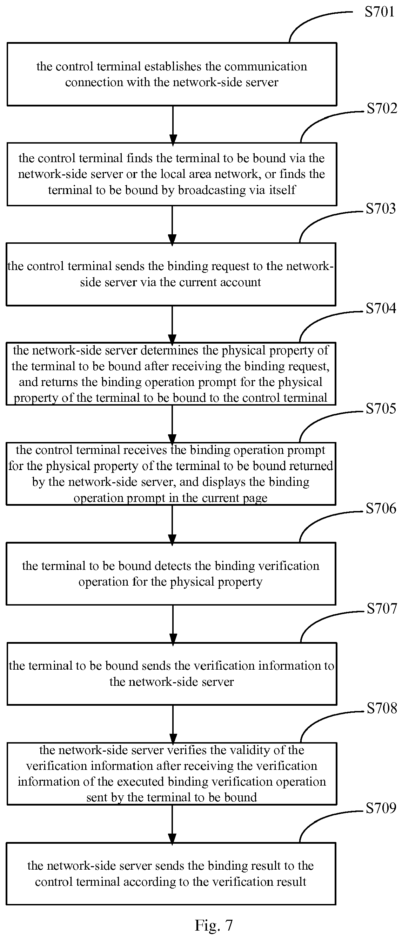

Fig. 7 is a flow chart showing a method for verifying permission according to an illustrative embodiment. As shown in Fig. 7, the method includes following steps.

In step S701, the control terminal establishes the communication connection with the network-side server.

In step S702, the control terminal finds the terminal to be bound via the network-side server or the local area network, or finds the terminal to be bound by broadcasting via itself. For example, when using the local area network, the control terminal establishes the communication connection with a router that generates the local area network, and finds the terminal to be bound by broadcasting via the router. The terminal to be bound is the smart device with an uncertain control permission.

In step S703, the control terminal sends the binding request to the network-side server via the current account.

In step S704, the network-side server determines the physical property of the terminal to be bound after receiving the binding request, and returns the binding operation prompt for the physical property of the terminal to be bound to the control terminal.

In step S705, the control terminal receives the binding operation prompt for the physical property of the terminal to be bound returned by the network-side server, and displays the binding operation prompt in a current page.

It is assumed that the binding operation prompt is configured to prompt the operation for the physical property of the terminal to be bound, for example, operating the device button, operating the remote controller, continuously shaking the image, inputting the particular voice, operating the electromagnetic induction switch, etc. Then step S706 is executed.

In step S706, the terminal to be bound detects the binding verification operation for the physical property. For example, the terminal to be bound realizes one or more of detecting that the device button is operated, detecting that the remote controller is operated, collecting the continuously shaking image, collecting the particular voice input, sensing that the electromagnetic induction switch is operated, detecting the physical deformation and detecting the physical displacement.

In step S707, the terminal to be bound sends the verification information to the network-side server.

In step S708, the network-side server verifies the validity of the verification information after receiving the verification information of the executed binding verification operation sent by the terminal to be bound. When verifying the validity, it may be detected whether this verification information is received within a preset period, and if this verification information is received beyond the preset period, this verification information is invalid. If the verification result is valid, the control relationship between the current account and the terminal to be bound is established.

In step S709, the network-side server sends the binding result to the control terminal according to the verification result. If the verification result is valid, the control relationship between the current account and the terminal to be bound is established.

With the method provided by the embodiment, the control relationship between the account and the terminal to be bound is determined accurately, the control permission is confirmed, and a control instruction is allowed to send to the terminal to be bound from the account. In addition, the terminal to be bound does not accept the control instruction from any other account, thus avoiding the abuse of a malicious user.

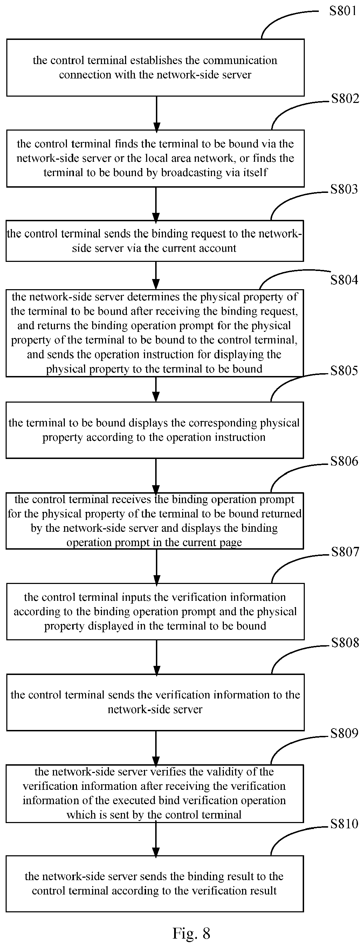

Fig. 8 is a flow chart showing a method for verifying permission according to an illustrative embodiment. As shown in Fig. 8, the method includes following steps.

In step S801, the control terminal establishes the communication connection with the network-side server.

In step S802, the control terminal finds the terminal to be bound via the network-side server or the local area network, or finds the terminal to be bound by broadcasting via itself. For example, when using the local area network, the control terminal establishes the communication connection with the router that generates the local area network, and finds the terminal to be bound by broadcasting via the router. The terminal to be bound is the smart device with the uncertain control permission.

In step S803, the control terminal sends the binding request to the network-side server via the current account.

In step S804, the network-side server determines the physical property of the terminal to be bound after receiving the binding request, and returns the binding operation prompt for the physical property of the terminal to be bound to the control terminal, and sends the operation instruction for displaying the physical property to the terminal to be bound.

In step S805, the terminal to be bound displays the corresponding physical property according to the operation instruction. The operation instruction for displaying the physical property includes one or more of displaying a random number, displaying a random character, displaying a pattern, displaying a phrase, controlling a color of an indicator light, controlling the number of indicator lights, controlling a flashing frequency of an indicator light, controlling a voice output, a physical deformation and a physical displacement.

In step S806, the control terminal receives the binding operation prompt for the physical property of the terminal to be bound returned by the network-side server and displays the binding operation prompt in the current page.

In step S807, the control terminal inputs the verification information according to the binding operation prompt and the physical property displayed in the terminal to be bound.

In step S808, the control terminal sends the verification information to the network-side server.

In step S809, the network-side server verifies the validity of the verification information after receiving the verification information of the executed binding verification operation which is sent by the control terminal. When verifying the validity, it is detected whether this verification information is received within a preset period, and if this verification information is received beyond the preset period, this verification information is invalid.

In step S810, the network-side server sends the binding result to the control terminal according to the verification result. When the verification result is valid, the control relationship between the current account and the terminal to be bound is established.

With the method provided by the embodiment, the control relationship between the account and the terminal to be bound is determined accurately, the control permission is confirmed, and the control instruction is allowed to send to the terminal to be bound from the account. In addition, the terminal to be bound does not accept the control instruction from any other account, thus avoiding the abuse of the malicious user.

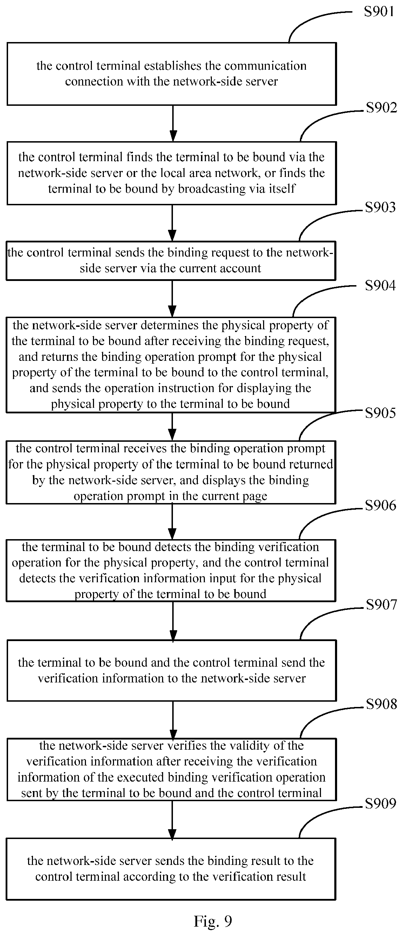

Fig. 9 is a flow chart showing a method for verifying permission according to an illustrative embodiment. As shown in Fig. 9, the method includes following steps.

In step S901, the control terminal establishes the communication connection with the network-side server.

In step S902, the control terminal finds the terminal to be bound via the network-side server or the local area network, or finds the terminal to be bound by broadcasting via itself. For example, when using the local area network, the control terminal establishes the communication connection with the router that generates the local area network, and finds the terminal to be bound by broadcasting via the router. The terminal to be bound is the smart device with the uncertain control permission.

In step S903, the control terminal sends the binding request to the network-side server via the current account.

In step S904, the network-side server and determines the physical property of the terminal to be bound after receiving the binding request, and returns the binding operation prompt for the physical property of the terminal to be bound to the control terminal, and sends the operation instruction for displaying the physical property to the terminal to be bound. For example, the operation instruction for displaying the physical property includes one or more of displaying a random number, displaying a random character, displaying a pattern, displaying a phrase, controlling a color of an indicator light, controlling the number of indicator lights, controlling flashing a frequency of an indicator light, controlling a voice output, a physical deformation and a physical displacement.

In step S905, the control terminal receives the binding operation prompt for the physical property of the terminal to be bound returned by the network-side server, and displays the binding operation prompt in the current page.

It is assumed that the binding operation prompt is configured to prompt the operation for the physical property of the terminal to be bound, for example, operating the device button, operating the remote controller, continuously shaking the image, inputting the particular voice, operating the electromagnetic induction switch, etc. Then step S906 is executed.

In step S906, the terminal to be bound detects the binding verification operation for the physical property, and the control terminal detects the verification information input for the physical property of the terminal to be bound. For example, the terminal to be bound realizes one or more of detecting that the device button is operated, detecting that the remote controller is operated, collecting the continuously shaking image, collecting the particular voice input, sensing that the electromagnetic induction switch is operated, detecting the physical deformation, detecting the physical displacement.

In step S907, the terminal to be bound and the control terminal send the verification information to the network-side server.

In step S908, the network-side server verifies the validity of the verification information after receiving the verification information of the executed binding verification operation sent by the terminal to be bound and the control terminal. When verifying the validity, it is detected whether this verification information is received within a preset period, and if this verification information is received beyond the preset period, this verification information is invalid. If the verification result is valid, the control relationship between the current account and the terminal to be bound may be established.

In step S909, the network-side server sends the binding result to the control terminal according to the verification result. If the verification result is valid, the control relationship between the current account and the terminal to be bound may be established.

With the method provided by the embodiment, the control relationship between the account and the terminal to be bound is determined accurately, the control permission is confirmed, and the control instruction is allowed to send to the terminal to be bound from the account. In addition, the terminal to be bound does not accept the control instruction from any other account, thus avoiding the abuse of the malicious user.

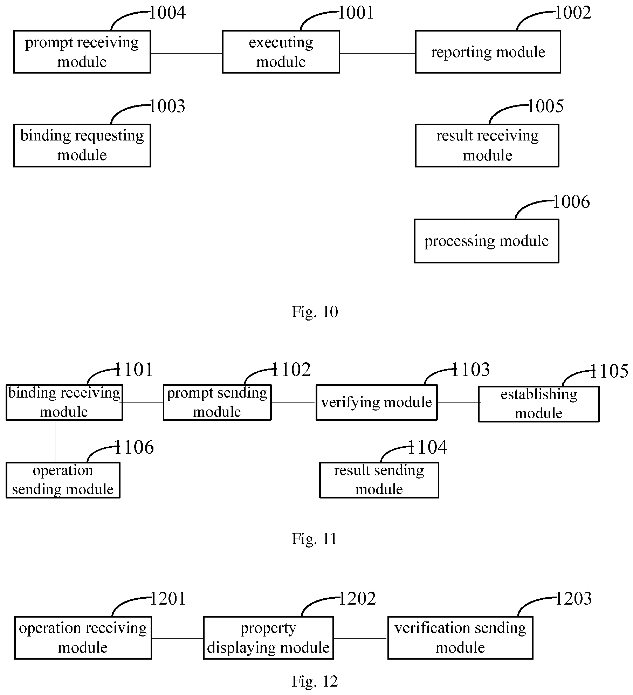

The embodiments of the present disclosure provide a device for verifying permission, and as shown in Fig. 10, the device includes an executing module 1001 and a reporting module 1002.

The executing module 1001 is configured to execute a binding verification operation according to a physical property displayed in a terminal to be bound.

The reporting module 1002 is configured to report verification information of the executed binding verification operation to a network-side server.

Alternatively, the device further includes a binding requesting module 1003 and a prompt receiving module 1004.

The binding requesting module 1003 is configured to send a binding request to the network-side server via a current account after establishing a communication connection with the terminal to be bound.

The prompt receiving module 1004 is configured to receive a binding operation prompt for the physical property of the terminal to be bound returned by the network-side server.

Alternatively, the device further includes a result receiving module 1005 and a processing module 1006.

The result receiving module 1005 is configured to receive a binding result returned by the network-side server according to the verification information.

The processing module 1006 is configured to determine a control relationship between the current account and the terminal to be bound if the binding result is successful, and to display a binding failure prompt if the binding result is failing.

The embodiments of the present disclosure provide a device for verifying permission, and as shown in Fig. 11, the device includes a binding receiving module 1101 and a prompt sending module 1102.

The binding receiving module 1101 is configured to receive a binding request sent by the control terminal via a current account after establishing a communication connection with a control terminal.

The prompt sending module 1102 is configured to send a binding operation prompt for a physical property of a terminal to be bound to the control terminal.

Alternatively, the device further includes a verifying module 1103 and a result sending module 1104.

The verifying module 1103 is configured to verify a validity of verification information after receiving the verification information of an executed binding verification operation that is sent by the control terminal and/or the terminal to be bound.

The result sending module 1104 is configured to send a binding result to the control terminal according to a verification result.

Alternatively, the device further includes an establishing module 1105.

The establishing module 1105 is configured to establish a control relationship between the current account and the terminal to be bound if the verification result is valid.

Alternatively, the device further includes an operation sending module 1106.

The operation sending module 1106 is configured to send an operation instruction for displaying the physical property to the terminal to be bound meanwhile sending the binding operation prompt for the physical property of the terminal to be bound to the control terminal.

The embodiments of the present disclosure provide a device for verifying permission, and as shown in Fig. 12, the device includes an operation receiving module 1201 and a property displaying module 1202.

The operation receiving module 1201 is configured to receive an operation instruction for displaying a physical property sent by a network-side server.

The property displaying module 1202 is configured to display a corresponding physical property according to the operation instruction.

Alternatively, the device further includes a verification sending module 1203.

The verification sending module 1203 is configured to send verification information to the network-side server after receiving a binding verification operation for the physical property.

With respect to the devices in the above embodiments, the specific manners for performing operations for individual modules therein have been described in detail in the embodiments regarding the methods, which are not elaborated herein again.

A device for verifying permission, includes:
a processor;
a memory configured to store an instruction executable by the processor;
in which the processor is configured to:
   execute a binding verification operation according to a physical property displayed in a terminal to be bound;
   report verification information of the executed binding verification operation to a network-side server;
   or
   receive a binding request sent by a control terminal via a current account after establishing a communication connection with the control terminal;
   send a binding operation prompt for a physical property of a terminal to be bound to the control terminal;
   or
   receive an operation instruction for displaying a physical property sent by a network-side server;
   display a corresponding physical property according to the operation instruction.

A non-transitory computer-readable storage medium having stored therein instructions which, when executed by a processor of a terminal, cause the terminal to perform a method for verifying permission, the method including:
executing a binding verification operation according to a physical property displayed in a terminal to be bound;
reporting verification information of the executed binding verification operation to a network-side server.

In an embodiment, the method further includes:
sending a binding request to the network-side server via a current account after establishing a communication connection with the terminal to be bound;
receiving a binding operation prompt for the physical property of the terminal to be bound returned by the network-side server.

In an embodiment, the method further includes:
receiving a binding result returned by the network-side server according to the verification information;
determining a control relationship between the current account and the terminal to be bound if the binding result is successful;
displaying a binding failure prompt if the binding result is failing.

The method for verifying permission, includes:
receiving a binding request sent by a control terminal via a current account after establishing a communication connection with the control terminal;
sending a binding operation prompt for a physical property of a terminal to be bound to the control terminal.

In an embodiment, the method further includes:
verifying a validity of verification information after receiving the verification information of an executed binding verification operation that is sent by the control terminal and/or the terminal to be bound;
sending a binding result to the control terminal according to a verification result.

In an embodiment, the method further includes:
establishing a control relationship between the current account and the terminal to be bound if the verification result is valid.

In an embodiment, the method further includes:
sending an operation instruction for displaying the physical property to the terminal to be bound meanwhile sending the binding operation prompt for the physical property of the terminal to be bound to the control terminal.

In an embodiment, the operation instruction for displaying the physical property includes one or more of displaying a random number, displaying a random character, displaying a pattern, displaying a phrase, controlling a color of an indicator light, controlling the number of indicator lights, controlling a flashing frequency of an indicator light, controlling a voice output, a physical deformation and a physical displacement.

The method for verifying permission, includes:
receiving an operation instruction for displaying a physical property sent by a network-side server;
displaying a corresponding physical property according to the operation instruction.

In an embodiment, the method further includes: sending verification information to the network-side server after receiving a binding verification operation for the physical property.

The method provided by embodiments of the present disclosure can simplify a verification operation of permission, make a user complete a permission verification by a simple button clicking operation, and have a high safety.

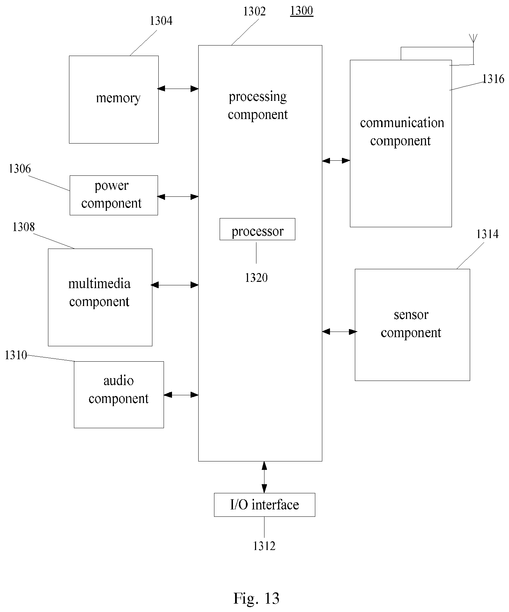

Fig. 13 is a block diagram showing a device 1300 for verifying permission according to an illustrative embodiment. For example, the device 1300 may be a mobile phone, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314 and a communication component 1316.

The processing component 1302 typically controls overall operations of the device 1300, such as the operations associated with display, telephone calls, data communications, camera operations, and recording operations. The processing component 1302 may include one or more processors 1320 to execute instructions so as to perform all or a part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, videos, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 is configured to provide power to various components of the device 1300. The power component 1306 may include a power management system, one or more power sources, and other components associated with the generation, control, and distribution of power in the device 1300.

The multimedia component 1308 includes a screen configured to provide an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum when the device 1300 is in an operation mode such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a loud speaker to output audio signals.

The I/O interface 1312 is configured to provide an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an on/off status of the device 1300, relative positioning of components (e.g., a display screen and a keypad) of the device 1300. The sensor component 1314 may further detect a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may further include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate a wired or wireless communication between the device 1300 and other terminals. The device 1300 can access a wireless network based on a communication standard, such as WiFi, 2G, or 3G, or a combination thereof. In one illustrative embodiment, the communication component 1316 receives a broadcast signal or broadcast associated information from an external broadcast control system via a broadcast channel. In one illustrative embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In illustrative embodiments, the device 1300 may be implemented with one or more electronic elements such as application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is further provided a non-transitory computer readable storage medium including instructions, such as the memory 1304 including instructions executable by the processor in the device 1300 to perform the above-described methods. For example, the non-transitory computer-readable storage medium may be a ROM, a RAM, a CD-ROM, a magnetic tape, a floppy disc, an optical data storage device, and the like.

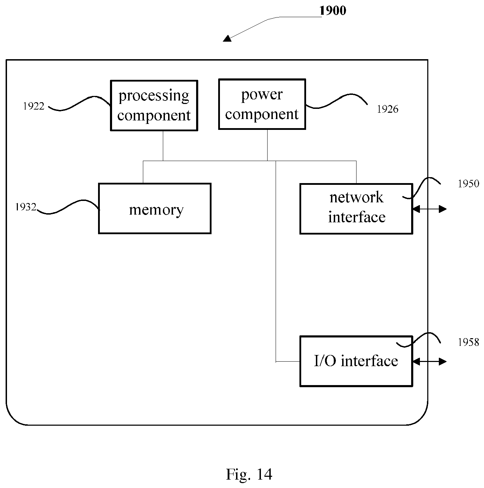

Fig. 14 is a block diagram of a device 1900 for verifying permission, according to an illustrative embodiment. For example, the device 1900 may be provided as a server. Referring to Fig. 14, the device 1900 may include a processing component 1922 which further include one or more processors, and a memory resource represented by a memory 1932 and configured to store instructions executable by the processing component 1922, such as application programs. The application programs stored in the memory 1932 may include one or more modules, in which each module corresponds to a set of instructions. Further, the processing component 1922 may be configured to execute instructions so as to perform the above methods.

The device 1900 may also include a power component 1926 configured to execute a power management of the device 1900, a wired or wireless network interface 1950 configured to connect the device 1900 to the internet, and an input/output interface 1958. The device 1900 may be operated based on an operating system stored in the memory 1932, such as Windows ServerTM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for obtaining a confirmation of a permission to control a terminal to be bound by a current account at a network-side server; the method comprising:
sending (S202), from a control terminal to the network-side server, via the current account, a binding request for binding the terminal to be bound to the current account;
determining, by the network-side server, a detectable physical property of the terminal to be bound according to a physical feature which the terminal to be bound has, the physical feature which the terminal to be bound has, being a display screen, an indicator light or a physical button;
sending, from the network-side server to the control terminal, a binding operation prompt relating to the determined detectable physical property;
executing (S101) by the control terminal a binding verification operation in response to the binding operation prompt relating to the physical property; wherein the binding verification operation consists in detecting on the terminal to be bound verification information relating to the detectable physical property;
reporting (S102), by the control terminal, the verification information relating to the detectable physical property of the executed binding verification operation to the network-side server;
verifying, (S403) at the network-side server, a validity of the reported verification information;
sending (S404), from the network-side server, a binding result to the control terminal according to a verification result of said verifying the validity of the reported verification information; ; and
establishing at the control terminal a control relationship between the current account at the network-side server and the terminal to be bound if the binding result is successful, and consequently the current account obtaining the confirmation of the permission to control the terminal to be bound; or
displaying at the control terminal a binding failure prompt if the binding result is failing.

2. The method according to claim 1, wherein:
the step of sending (S202) the binding request for binding the terminal to be bound to the current account occurs after establishing a communication connection with the terminal to be bound.

3. The method according to claim any one of claims 1 to 2, wherein,
the detectable physical property of the terminal to be bound comprises one or more of a displayed random number, a displayed random character, a displayed pattern, a displayed phrase, a color of an indicator light, the number of indicator lights, a flashing frequency of an indicator light, a voice output, and a physical deformation.

4. The method according to any preceding claim, further comprising:
sending, when the binding operation prompt is sent, from the network-side sever to the terminal to be bound, an operation instruction relating to the detectable physical property.

5. The method according to claim 4, wherein,
the operation instruction relating to the detectable physical property comprises one or more of displaying a random number, displaying a random character, displaying a pattern, displaying a phrase, controlling a color of an indicator light, controlling the number of indicator lights, controlling a flashing frequency of an indicator light, controlling a voice output, and controlling the terminal to be bound to have a physical deformation.

6. A system for obtaining a confirmation of a permission to control a terminal to be bound by a current account at a network-side server; the system comprising:
a control terminal;
the terminal to be bound; and
the network-side server;
the system configured to perform the method according to any of claims 1 to 5.

7. A computer program comprising instructions, which, when executed by a control terminal, a terminal to be bound and a network-side server, cause the control terminal, the terminal to be bound and the network-side server to perform the method according to any one of claims 1 to 5.

## Patentansprüche

1. Verfahren zum Erhalten einer Bestätigung einer Berechtigung zum Steuern eines zu bindenden Endgeräts durch ein aktuelles Konto an einem netzwerkseitigen Server, wobei das Verfahren Folgendes aufweist:
Senden (S202) einer Bindeanforderung zum Binden des zu bindenden Endgeräts an das aktuelle Konto über das aktuelle Konto von einem Steuerungsendgerät zum netzwerkseitigen Server;
Bestimmen, durch den netzwerkseitigen Server, einer erkennbaren physischen Eigenschaft des zu bindenden Endgeräts gemäß einem physischen Merkmal, welches das zu bindende Endgerät hat, wobei das physische Merkmal, welches das zu bindende Endgerät hat, ein Anzeigebildschirm, eine Anzeigeleuchte oder eine physische Taste ist;
Senden einer Bindeoperationsaufforderung, die sich auf die bestimmte erkennbare physische Eigenschaft bezieht, vom netzwerkseitigen Server zum Steuerungsendgerät;
Ausführen (S101) einer Bindungsverifizierungsoperation als Reaktion auf die Bindeoperationsaufforderung, die sich auf die physische Eigenschaft bezieht, durch das Steuerungsendgerät; wobei die Bindungsverifizierungsoperation im Erkennen von Verifizierungsinformationen in Bezug auf die erkennbare physische Eigenschaft am zu bindenden Endgerät besteht;
dem netzwerkseitigen Server Melden (S102) der Verifizierungsinformationen in Bezug auf die erkennbare physische Eigenschaft der ausgeführten Bindungsverifizierungsoperation durch das Steuerungsendgerät;
Verifizieren (S403) einer Gültigkeit der gemeldeten Verifizierungsinformationen am netzwerkseitigen Server;
Senden (S404) eines Bindungsergebnisses vom netzwerkseitigen Server an das Steuerungsendgerät gemäß einem Verifizierungsergebnis des genannten Verifizierens der Gültigkeit der gemeldeten Verifizierungsinformationen; und
am Steuerungsendgerät Einrichten einer Steuerungsbeziehung zwischen dem aktuellen Konto am netzwerkseitigen Server und dem zu bindenden Endgerät, falls das Bindungsergebnis erfolgreich ist, und folglich Erhalten der Bestätigung der Berechtigung zum Steuern des zu bindenden Endgeräts durch das aktuelle Konto;
Anzeigen einer Bindungsmisserfolgsaufforderung am Steuerungsendgerät, falls das Bindungsergebnis erfolglos ist.

2. Verfahren nach Anspruch 1, wobei:
der Schritt des Sendens (S202) der Bindeanforderung zum Binden des zu bindenden Endgeräts an das aktuelle Konto nach dem Einrichten einer Kommunikationsverbindung mit dem zu bindenden Endgerät stattfindet.

3. Verfahren nach einem der Ansprüche 1 bis 2, wobei
die erkennbare physische Eigenschaft des zu bindenden Endgeräts ein oder mehr von einer angezeigten Zufallszahl, einem angezeigten Zufallszeichen, einem angezeigten Muster, einem angezeigten Ausdruck, einer Farbe einer Anzeigeleuchte, der Anzahl von Anzeigeleuchten, einer Blinkfrequenz einer Anzeigeleuchte, einer Sprachausgabe und einer physischen Verformung aufweist.

4. Verfahren nach einem der vorhergehenden Ansprüche, das ferner Folgendes aufweist:
wenn die Bindungsoperationsaufforderung gesendet wird, Senden einer Operationsanweisung in Bezug auf das erkennbare physische Merkmal vom netzwerkseitigen Server zum zu bindenden Endgerät.

5. Verfahren nach Anspruch 4, wobei
die Operationsanweisung in Bezug auf die erkennbare physische Eigenschaft ein oder mehr von dem Anzeigen einer Zufallszahl, dem Anzeigen eines Zufallszeichens, dem Anzeigen eines Musters, dem Anzeigen eines Ausdrucks, dem Steuern einer Farbe einer Anzeigeleuchte, dem Steuern der Anzahl von Anzeigeleuchten, dem Steuern einer Blinkfrequenz einer Anzeigeleuchte, dem Steuern einer Sprachausgabe und dem Steuern des zu bindenden Endgeräts, so dass es eine physische Verformung hat.

6. System zum Erhalten einer Bestätigung einer Genehmigung zum Steuern eines zu bindenden Endgeräts durch ein aktuelles Konto an einem netzwerkseitigen Server, wobei das System Folgendes aufweist:
ein Steuerungsendgerät,
das zu bindende Endgerät und
den netzwerkseitigen Server;
wobei das System zum Durchführen des Verfahrens nach einem der Ansprüche 1 bis 5 konfiguriert ist.

7. Computerprogramm, das Anweisungen aufweist, die bei Ausführung durch ein Steuerungsendgerät, ein zu bindendes Endgerät und einen netzwerkseitigen Server das Steuerungsendgerät, das zu bindende Endgerät und den netzwerkseitigen Server zum Durchführen des Verfahrens nach einem der Ansprüche 1 bis 5 veranlassen.

## Revendications

1. Procédé d'obtention d'une confirmation d'une autorisation de commander un terminal à rattacher par un compte courant au niveau d'un serveur côté réseau ; le procédé comprenant :
l'envoi (S202), par un terminal de commande au serveur côté réseau, par l'intermédiaire du compte courant, d'une demande de rattachement pour rattacher un terminal à rattacher au compte courant ;
la détermination, par le serveur côté réseau, d'une propriété physique détectable du terminal à rattacher conformément à une caractéristique physique que possède le terminal à rattacher, la caractéristique physique du terminal à rattacher étant un écran d'affichage, un témoin lumineux ou un bouton physique ;
l'envoi, par le serveur côté réseau au terminal de commande, d'une invite d'opération de rattachement relative à la propriété physique détectable déterminée ;
l'exécution (S101) par le terminal de commande d'une opération de vérification de rattachement en réponse à l'invite d'opération de rattachement relatives à la propriété physique ; l'opération de vérification de rattachement consistant en la détection sur le terminal à rattacher d'information de vérification relatives à la propriété physique détectable ;
le rapport (S102), par le terminal de commande, des informations de vérification relatives à la propriété physique détectable de l'opération de vérification de rattachement exécutée au serveur côté réseau ;
la vérification, (S403) au niveau du serveur côté réseau, d'une validité des informations de vérification rapportées ;
l'envoi (S404), par le serveur côté réseau, d'un résultat de rattachement au terminal de commande conformément à un résultat de vérification de ladite vérification de la validité des informations de vérification rapportées ; et
l'établissement au niveau du terminal de commande d'une relation de commande entre le compte courant au niveau du serveur côté réseau et le terminal à rattacher si le résultat de rattachement est positif, et en conséquence l'obtention par le compte-courant de la confirmation de l'autorisation de commander le terminal à rattacher ; ou
l'affichage, au niveau du terminal de commande, d'une indication d'échec de rattachement si le résultat de rattachement est négatif.

2. Procédé selon la revendication 1, dans lequel :
l'étape d'envoi (S202) de la demande de rattachement pour rattacher le terminal à rattacher au compte courant se produit après l'établissement d'une connexion de communication avec le terminal à rattacher.

3. Procédé selon l'une quelconque des revendications 1 à 2, dans lequel,
la propriété physique détectable du terminal à rattacher comprend un ou plusieurs d'un nombre aléatoire affiché, d'un caractère aléatoire affiché, d'un motif affiché, d'une phrase affichée, d'une couleur d'un témoin lumineux, du nombre de témoins lumineux, d'une fréquence de clignotement d'un témoin lumineux, d'une sortie vocale, et d'une déformation physique.

4. Procédé selon l'une quelconque des revendications précédentes, comprenant en outre :
l'envoi, quand l'invite d'opération de rattachement est envoyée, par le serveur côté réseau au terminal à rattacher, d'une instruction d'opération relative à la propriété physique détectable.

5. Procédé selon la revendication 4, dans lequel, l'instruction d'opération relative à la propriété physique détectable comprend un ou plusieurs d'un affichage d'un nombre aléatoire, d'un affichage d'un caractère aléatoire, d'un affichage d'un motif, d'un affichage d'une phrase, d'une commande d'une couleur d'un témoin lumineux, d'une commande du nombre de témoins lumineux, d'une commande d'une fréquence de clignotement d'un témoin lumineux, d'une commande d'une sortie vocale, et d'une commande du terminal à rattacher pour représenter une déformation physique.

6. Système d'obtention d'une confirmation d'une autorisation de commander un terminal à rattacher par un compte courant au niveau d'un serveur côté réseau, le système comprenant :
un terminal de commande ;
le terminal à rattacher ; et
le serveur côté réseau ;
le système étant configuré pour réaliser le procédé selon l'une quelconque des revendications 1 à 5.

7. Produit informatique comprenant des instructions qui, à leur exécution par un terminal de commande, un terminal à rattacher et un serveur côté réseau, amènent le terminal de commande, le terminal à rattacher et le serveur côté réseau à réaliser le procédé selon l'une quelconque des revendications 1 à 5.
